Europäisches Patentamt

European Patent Office

Office européen des brevets

(11) Publication number: **0 227 474**
**A2**

# (12) EUROPEAN PATENT APPLICATION

(21) Application number: **86310093.9**

(22) Date of filing: **23.12.86**

(51) Int. Cl.⁴: **F 16 J 15/18**

(30) Priority: **26.12.85 US 813567**

(43) Date of publication of application:
**01.07.87 Bulletin 87/27**

(84) Designated Contracting States:
**AT BE CH DE ES FR GB GR IT LI LU NL SE**

(71) Applicant: **ELECTRIC POWER RESEARCH INSTITUTE, INC**
**3412 Hillview Avenue**
**Palo Alto California 94303 (US)**

(72) Inventor: **Ruggieri, Steven K.**
**110-1 Washington Park**
**Newtonville Massachusetts 02160 (US)**

**Leduc, Robert D.**
**72 Nutting Road**
**Westford Massachusetts 01886 (US)**

**Kelly, Jonathan S.**
**156 High Street**
**Acton Massachusetts 01720 (US)**

**Grabski, Charles E.**
**2 Sandra Lane, No.**
**Reading Massachusetts 01864 (US)**

(74) Representative: **Jackson, David Spence et al**
**REDDIE & GROSE 16, Theobalds Road**
**London, WC1X 8PL (GB)**

(54) **A self energized seal or packing.**

(57) To seal off a high pressure area (62) from a low pressure area (64) by providing an increasing seal between a stem (44) and a stuffing box body (48) as the pressure differential between the high and low pressure areas (62,64) increases, a packing (42) that utilizes system pressure to load the packing and achieve sealing is located between the stem (44) and the stuffing box body (48) and consists of resilient end rings (52,54) and a stack of wedge-shaped annular non-resilient members (56) which are able to slide radially against each other to exert higher radial pressure as axial pressure increases. The high pressure fluid area (62) is in contact with one end ring (54), and a gland follower (94) is in contact with the other end ring(52).

FIG 2

**Description**

## A SELF ENERGIZED SEAL OR PACKING

### BACKGROUND OF THE INVENTION

Field of the Invention

The present invention relates generally to an improved seal or packing assembly and in particular to a self energized pressure responsive sealing means for providing an increasing seal between a stem, rod or shaft and stuffing box wall as the pressure differential between a high pressure fluid area contained by the stuffing box and a lower pressure operator area increases while allowing for axial and/or rotary movement of the stem, rod or shaft without leakage of the high pressure fluid.

Description of the prior art

High pressure vessels e.g. valves or chambers, wherein some function in the high pressure area (e.g. internal to the vessel) is controlled or regulated from a low pressure area (e.g. external to the vessel) require a means for sealing off a stem, rod or shaft which penetrates the boundary between the high pressure area and low pressure area. This sealing means is disposed between the stem and pressure vessel (e.g. valve stem and body) within an annular gap called the stuffing box and permits axial and/or radial motion of the stem as needed to perform the control function while maintaining a seal of the high pressure media. Conventional packing, often referred to as compression or jam packing, take the form of annular rings having a square or rectangular cross section which are compressed by high levels of force to deform the packing sufficiently to completely fill and seal this annular gap between the stem and the stuffing box wall. Force on the conventional square compression packing is normally exerted by manually tightening gland nuts onto a gland flange acting on a gland follower which then acts to provide an axial compressive stress on the compression packing rings. The packing converts axial compressive stress into normal pressure applied radially against the valve stem and stuffing box wall. When this normal pressure exceeds the fluid pressure in the high pressure area, nominal sealing is obtained between the stem and stuffing box wall. This conventional method of deforming the packing sufficiently to seal the annular gap between the stem and the the stuffing box wall results in excessive levels of stem operating friction when motion is imparted to the stem. Because the transfer of forces (axial into radial) is inefficient in conventional square packing, an axial or gland pressure much greater than that contained in the high pressure fluid is required for sealing. Further, as conventional packing consolidates in service due to stem movement, loss of voids, wear and differential thermal expansion of the stuffing box and stem, the packing pressure decays rapidly causing the normal pressure applied radially against the stem and stuffing box wall to fall below the fluid pressure in the high pressure area resulting in leakage of high pressure fluid, through the annular gaps of the stuffing box, into the low pressure area. This fluid leakage is controlled by frequent manual adjustment of the gland nuts to, once again, increase the axial pressure on the packing sufficiently to deform the packing until the normal pressure exceeds the level of the high pressure fluid. Accordingly, it would be desirable to have a sealing means disposed within the stuffing box and able to replace conventional packing without modification to the stuffing box, that requires only a minimal or negligible amount of material compression to provide the required seal between the stem and stuffing box wall between the high pressure area and low pressure area acting on each end of the stuffing box. It would further be desirable to have this sealing means to be self energized by the pressure differential between the high and low pressure areas. It would also be desirable for this self-energized sealing means to be pressure responsive to provide the seal necessary for leakage control with minimal levels of force i.e. as the pressure differential increases, the effectiveness of the seal increases without the need for further gland nut adjustment. Finally, it would be desirable for this sealing means to be self adjusting as the packing wears and/or differential thermal expansion of the stem and stuffing box wall are taking place.

Summary of the Invention

Briefly the invention is a pressure responsive self energized seal or packing for sealing off a high pressure fluid area from a lower pressure area, such as, ambient/atmospheric, and in particular for sealing the annular gap, or stuffing box, between the stem, rod or shaft and the stuffing box wall, between said high and low pressure areas, while permitting axial and/or rotary motion of the stem, rod or shaft. The sealing of the high pressure area from the lower pressure area is accomplished through the use of an active sealing means which obtains a large part of its sealing energy from the pressure differential between the high and low pressure areas providing an increasingly effective seal as said pressure differential increases. The sealing means, according to the teachings of the invention, includes truncated wedge shaped annular packing rings stacked in an alternating fashion within the stuffing box which cooperate to slide radially along their contiguous perimeters applying sealing pressure against the stem and stuffing box wall when an axial force is imparted so as to completely fill the void within the stuffing box. The truncated wedge shaped annular rings require only a minimal amount of gland pressure for seating the rings before the forces of the high pressure fluid efficiently are transferred into radial packing movement and achieving effective low force pressure responsive sealing between the stem and stuffing box.

## BRIEF DESCRIPTION OF THE DRAWINGS

The invention may be understood, and further advantages and uses thereof more readily apparent, when considered in view of the following detailed description of the exemplary embodiments, taken with the accompanying drawings in which:

Figure 1 is a cross sectional view of a typical stuffing box illustrating conventional square compression packing of the prior art which requires high levels of force to deform the packing to completely fill the annular gap between the stem and the stuffing box wall;

Figure 2 is a cross sectional view of the graphite truncated wedge shaped valve stem packing rings constructed according to the teachings of the invention disposed within a typical stuffing box;

Figure 3 is a schematic view of the truncated wedge shaped stem packing of the invention illustrating the resolution of the axial force acting on the bottom wedge, (responsive to the system pressure differential) is transferred into radial sealing forces against the stem and stuffing box wall;

Figure 4 is a graph which illustrates the performance of the self energized packing assembly according to this invention.

## DESCRIPTION OF THE PREFERRED EMBODIMENTS

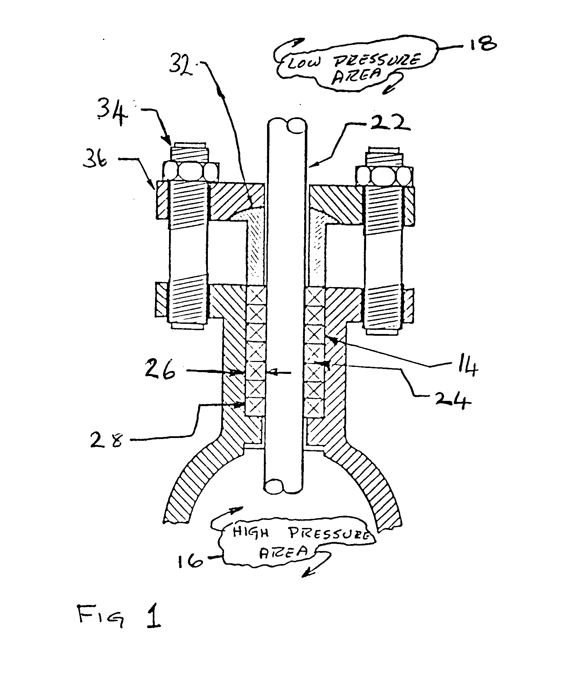

Referring now to the drawings and to Figure 1 in particular there is shown an enlarged view of a typical stuffing box 14, between a high pressure fluid 16 and a lower pressure area 18, which circumvents a stem, rod or shaft 22 and which is filled with conventional square cross section packing rings 24 composed of a braided fiber, such as asbestos, or a solid, non-resilient material such as graphite. Conventional square cross section annular compression packing rings 24 require high levels of axial gland force to radially deform the packing sufficiently to completely fill and seal the annular gap 26, between valve stem 22 and stuffing box wall 28. The axial gland force or pressure required for effective sealing is much greater than that contained in the high pressure fluid being sealed due to the inefficient transfer of axial forces into radial sealing forces within conventional packing configurations. This high level force is generated by means of gland follower 32, which is acted upon by gland nuts 34 through gland flange 36, to provide a compressive stress on packing rings 24. As the conventional packing 24 consolidates in service due to stem movement, loss of voids, wear and differential thermal expansion of the stuffing box 14 and the stem 22, rod or shaft, the sealing pressure decays rapidly resulting in leakage of the high pressure fluid 16 into the lower pressure area 18. Frequent adjustment of the gland nuts 34 is required to maintain sufficient axial gland pressure on the conventional packing 24, to effect a seal between the stem 22 and stuffing box wall 28.

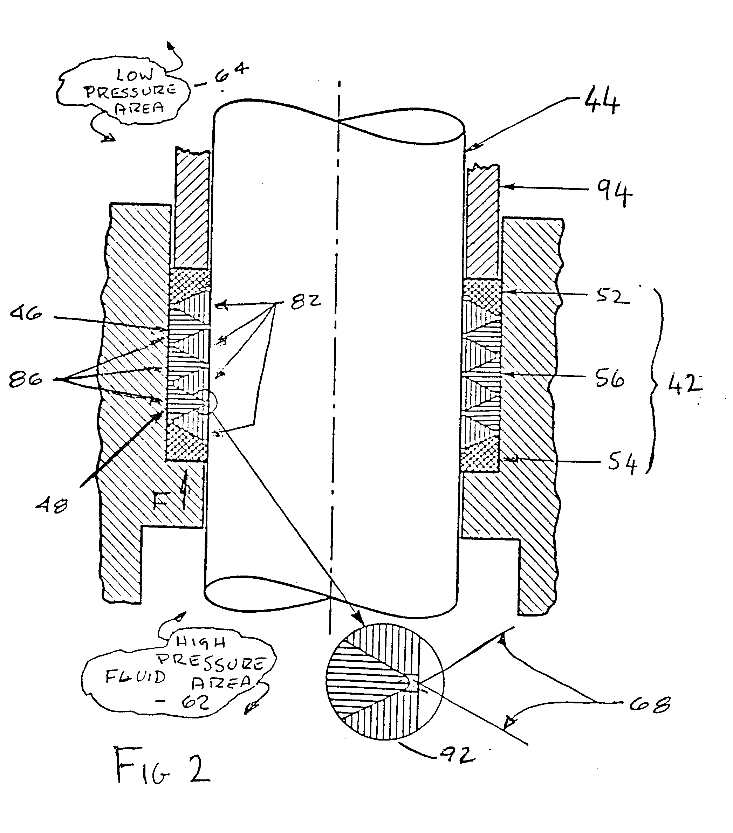

Referring now to Figure 2 there is shown novel sealing means 42 of the instant invention, disposed between stem 44 and stuffing box wall 46 within the stuffing box 48. Pressure responsive sealing means 42 includes two resilient end rings 52 and 54 made of, for example, braided graphite fiber and seven wedge shaped precision die formed rings 56 stacked in an alternating fashion, made of, for example, a high purity expanded graphite ribbon that is non-resilient. The two resilient braided end rings 52 and 54, together with the seven precision die formed wedge shaped rings 56 constitute pressure responsive sealing means 42. The resilient braided rings 52 and 54 are installed at the top and bottom, respectively of pressure responsive sealing means 42 to provide support for the seven die formed non-resilient rings 56 and to evenly distribute axial forces from the high pressure fluid 62 to the die formed graphite wedges 56. The braided graphite end rings 52 and 54 also prevent extrusion of the precision die formed graphite wedges 56, and act as a wiper to control damaging graphite particle build up on valve stem 44. Pressure responsive sealing means 42 provides actual sealing by means of the seven die formed annular graphite rings 56, which have wedge shaped cross sections as shown in Figure 2.

Four of the adjacent die formed wedge shaped graphite rings, such as the four shown at 82 abut to form a sealing surface against the stem 44, while three of the die formed wedge shaped graphite rings, such as the three shown at 86, are placed in the spaces formed by the adjacent four 82, and abut to form a sealing surface against the stuffing box wall 46. The sloping surfaces 68 shown in Figure 2 (those not in contact with the stem 44 or stuffing box wall 46) of each annular solid graphite ring converge at equal angles to form a truncated apex 72 as shown in Figure 2. Each of the seven annular wedge shaped cross section annular packing rings is die formed from high purity graphite expanded ribbon, which is selected for the wedge material due to its density, temperature/chemical/radiation resistance and self lubricating properties. The use of a solid, highly precompressed dense graphite packing ring die formed into the wedge configuration allows only a minimum amount of material compression before the forces of the high pressure fluid are transferred into radial packing movement and sealing.

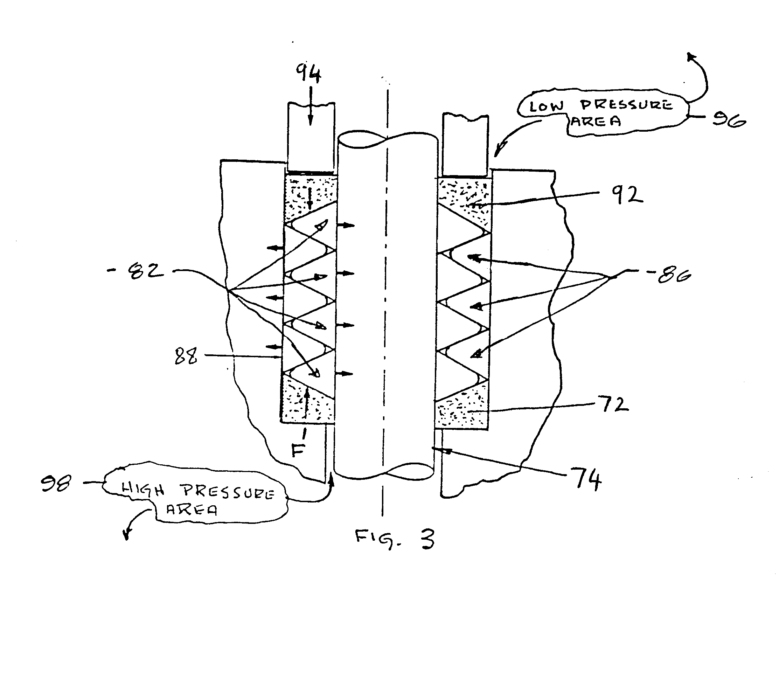

Referring now to Figure 3, in operation, an initial preload is applied to first braided graphite end ring 92 of pressure responsive sealing means by means of gland follower 94 in order to seat the packing set or sealing means. Then the pressure differential between the lower pressure area 96 and high pressure area 98, imparts an axial force shown generally at F to second braided graphite end ring 72 which is efficiently transferred into radial sealing forces against stem 74 and stuffing box wall 88 by means of the seven wedge shaped cross section precision die formed graphite rings 82 and 86 as shown schematically in Figure 3. As the pressure differential is increased due to an increase of pressure in high pressure area 98 (low pressure area is normally but not always a constant ambient/atmospheric pressure) the radial sealing forces against stem 74 and stuffing box wall 88, as shown in Figure 3, automatically rise (self-adjust) without the need for further gland follower adjustment. This insures positive leakage control with low compressive force levels commensurate with system pressure. Referring now to and as shown in Figure 2, the apexes 72 of each of the die formed graphite wedges 56 are truncated to allow the die formed graphite shaped wedges 56 to move sufficiently to seal. Without this truncated apex, the alternating die formed graphite shaped wedges 56 would contact the stem surface 44 and stuffing box walls 46 with their alternating apexes and restrict the movement required for effective sealing and thereby become a compressive packing rather than a self energized pressure responsive sealing means, such as sealing means 42. The truncated apex 72, also allows easy installation into the stuffing box 48.

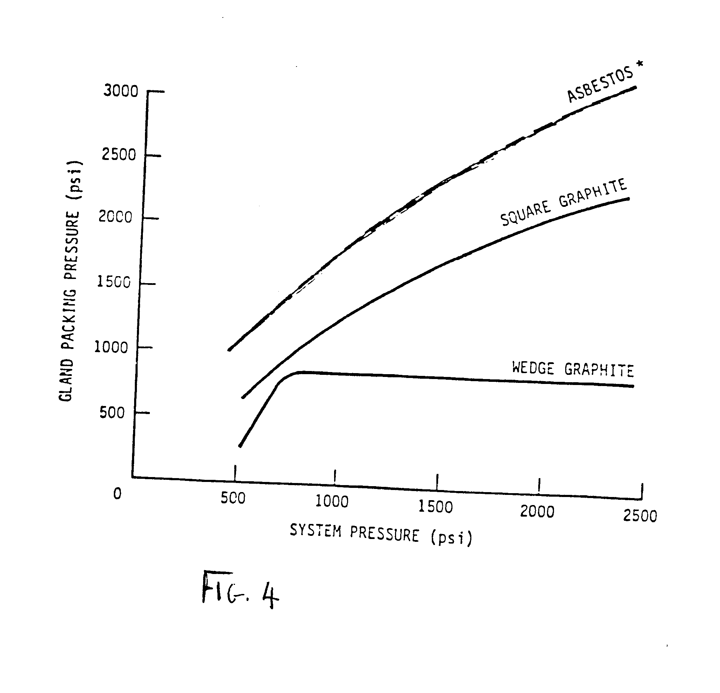

In one test the axial gland pressure necessary to seal against increasing levels of system pressure were measured for square braided asbestos packing, square die formed graphite packing and the new sealing means 42 (of Figure 2) described herein. Referring now to and as indicated in Figure 4, increasing gland pressure was required by both square cross section packing materials (braided asbestos and die formed graphite) in order to seal against increasing system pressures. For the die formed wedge shaped graphite packing with the truncated apex, no gland adjustment was required to maintain sealing from a system pressure of 800 psi up to 2400 psi. As the system pressure increased, the sealing forces rose automatically without the need for further gland adjustment.

It should be noted with regard to Fig. 4 that the results obtained for the asbestos packing were with a minimal leakage rate. Both graphite packings exhibited no leakage during tests.

It is to be understood that the teachings of the invention were illustrated with reference to Figures 2, 3 and 4, since this design of the pressure responsive sealing means 42 (of Figure 2) of the invention solved certain problems and was highly successful for a slowly moving stem with axial and/or rotary motion. It is felt the combination of the truncated wedge shape and the non-resilient material selection for the high density grapnite wedge shaped cross section rings, provided the superior performance of the improved stem packing. These design parameters give the packing its unique self energizing characteristics. However the invention is not to be considered so limited. For instance it is felt that in some applications two alternating truncated apex wedge shaped annular rings may be sufficient to perform as taught by the invention.

**Claims**

1. A stuffing box having a self energized pressure responsive sealing means for sealing off a high pressure fluid area from a low pressure fluid area, comprising:

    a) A stuffing box body having an opening disposed between said high and low pressure areas;

    b) a shaft disposed within said opening between said high and low pressure areas; and

    c) a pressure responsive sealing means disposed between said shaft and said stuffing box body for providing a increasing seal between said shaft and said stuffing box body as the pressure differential between said high and low pressure areas increases, while allowing for axial and rotary motion of said shaft.

2. The stuffing box having a self energizing pressure responsive sealing means of Claim 1, wherein said stuffing box body opening and said shaft have annular cross sections and said pressure responsive sealing means further includes a predetermined number of annular graphite rings having a wedge shaped cross section including a base and a truncated apex, a portion of said rings disposed between said stem and said stuffing box wall such that their bases rest against said stem and their truncated apex face away from said stem toward said stuffing box wall, the remainder of said wedge shaped cross section annular rings being disposed in the opposite configuration with their base proximate said stuffing box wall and their apex facing said stem, said stuffing box further including a restraining means in ridged communication with said annular wedge shaped ring closest to the low pressure area, and the other end of the stack of wedge shaped rings being in fluid communication with said high pressure area, said high pressure forcing said wedge shaped annular sealing rings to slide along their contiguous perimeter to completely fill the void between said stem and said stuffing box wall, the greater the pressure differential between said low pressure and said high pressure areas providing a greater force on said wedge shaped annular sealing rings to expand so as to provide a greater seal between said stem and said stuffing box wall.

3. The stuffing box having a self energizing pressure responsive sealing means of Claim 1, wherein said stuffing box body opening and said shaft have annular cross sections and wherein said pressure responsive sealing means further includes a predetermined number of annular graphite rings having alternating wedge shaped cross sections juxtaposed with one another to form an annular stack of said rings having first and second ends; said first end being restrained and said second end being in fluid communication with said high pressure area; at least one of said wedge shaped rings having a truncated apex to provide for at least a portion of said wedge shaped annular rings to cooperatively slide along their contiguous perimeters to completely fill the void within said valve stem opening due to the force on said first and second ends of said stack of wedge shaped rings responsive to the pressure differential between said low pressure and said high pressure areas.

4. The stuffing box having a self energizing pressure responsive sealing means of Claim 1, wherein said stuffing box body opening and said shaft have annular cross sections and said pressure responsive sealing means further includes a predetermined number of annular graphite rings having alternating wedge shaped cross sections juxtaposed with one another to form an annular stack of said rings having first and second ends; said first end being restrained and said second end being in fluid communication with said high pressure area; said graphite rings being made out of non-compressive die formed graphite material, so as to cooperatively slide along their contiguous perimeters to completely fill the void within said valve stem opening due to the force of said first and second ends of said stack of wedge shape rings responsive to the pressure differential between said low pressure and said high pressure areas rather than compress.

5. The stuffing box having a self energizing pressure responsive sealing means, according to Claim 3 further including end rings formed out of resilient materials disposed on each side of the annular stack of said annular graphite rings for evenly distributing said forces acting on either side of said annular stack of said annular graphite rings.

0227474

32

LOW PRESSURE AREA — 18

34

36

22

26

28

14

24

HIGH PRESSURE AREA

16

FIG 1

LOW PRESSURE AREA — 64

44

94

46

86

82

48

F1

52

56

42

54

HIGH PRESSURE FLUID AREA — 62

92

68

FIG 2

0227474

FIG. 3

0227474

FIG. 4